# EUROPEAN PATENT APPLICATION

(11) **EP 4 645 605 A1**
(43) Date of publication of application: **05.11.2025**
(21) Application number: 23932777.8
(22) Date of filing: 13.11.2023
(51) Int. Cl.: H01R 12/71, H01R 13/633, H04B 1/3818

(54) **ELECTRONIC DEVICE**

(30) Priority: 11.04.2023 CN 202320895401 U
(71) Applicant: Honor Device Co., Ltd., Shenzhen, Guangdong 518040 (CN)
(72) Inventor: ZHANG, Liangliang, Shenzhen, Guangdong 518040 (CN); SUN, Jian, Shenzhen, Guangdong 518040 (CN); ZHAO, Yawei, Shenzhen, Guangdong 518040 (CN)
(74) Representative: Isarpatent
(86) International application number: PCT/CN2023/131370
(87) International publication number: WO 2024/212506

(57) **Abstract**

An embodiment of this application provides an electronic device, including a middle frame, an eject pin, and a card tray assembly. A side wall of the middle frame is provided with an eject pin hole, and the eject pin is movably arranged in the eject pin hole. The card tray assembly includes a circuit board, and the middle frame surrounds to form an accommodating cavity. The eject pin hole communicates with the accommodating cavity, and the circuit board is arranged in the accommodating cavity. An avoidance portion is arranged on a periphery of an end of the eject pin facing the accommodating cavity, and the avoidance portion is configured to avoid the circuit board during movement of the eject pin toward the accommodating cavity. The avoidance portion is arranged on the periphery of the eject pin, and the avoidance portion avoids the circuit board to avoid interference or scratching between the eject pin and the circuit board.

## Description

This application claims priority to Chinese Patent Application No. 202320895401.2, filed with the China National Intellectual Property Administration on April 11, 2023 and entitled "ELECTRONIC DEVICE", which is incorporated herein by reference in its entirety.

### TECHNICAL FIELD

Embodiments of this application relate to the technical field of smart terminal devices, and in particular, to an electronic device.

### BACKGROUND

With continuous development of electronic technologies, electronic devices such as mobile phones and computers are inseparable from people's life. In life, electronic devices can be seen everywhere and greatly improve people's living standards. With continuous increase of use requirements of users, requirements on a data processing capability of electronic devices also continuously increase. More and more electronic devices each are provided with a card tray assembly into which a memory card or another chip card may be inserted, so as to expand a data storage capability of the electronic device by externally inserting the memory card or another chip card. The card tray assembly is an important component in the electronic device, and is usually configured to assist in positioning and fixing the memory card or another chip card.

In a related technology, an electronic device usually has a built-in card tray assembly. The card tray assembly usually includes a card tray, an eject pin, and a circuit board. The memory card or another chip card may be placed on the card tray and is electrically connected to the circuit board. The card tray may be ejected from the electronic device under the action of the eject pin. That is, the memory card or another chip card may be mounted into the card tray assembly, so that the memory card or another chip card and the card tray assembly are jointly inserted into the electronic device, to complete mounting of the memory card or another chip card.

However, as miniaturization and lightening and thinning become a development direction of electronic devices in the future, space of the electronic devices in a thickness direction is continuously compressed, resulting in a limited internal space of the electronic devices. In the process of driving the card tray to be ejected by the eject pin, the eject pin is easily subjected to interference with the circuit board of the card tray assembly during the movement, resulting in a problem such as difficulty in removing a card or scratching of the circuit board.

### SUMMARY

An embodiment of this application provides an electronic device, to avoid a circuit board during movement of an eject pin, and solve a problem in a related technology that an eject pin is easily subjected to interference with a circuit board, resulting in a problem of difficulty in removing a card or scratching of the circuit board.

This application provides an electronic device, including a middle frame, an eject pin, and a card tray assembly, where a side wall of the middle frame is provided with an eject pin hole, and the eject pin is movably arranged in the eject pin hole; the card tray assembly includes a circuit board, the middle frame surrounds to form an accommodating cavity, the eject pin hole communicates with the accommodating cavity, and the circuit board is arranged in the accommodating cavity; and an avoidance portion is arranged on a periphery of an end of the eject pin facing the accommodating cavity, and the avoidance portion is configured to avoid the circuit board during movement of the eject pin toward the accommodating cavity.

In the electronic device according to the embodiment of this application, the avoidance portion opposite to the circuit board is arranged on the periphery of the end of the eject pin facing the accommodating cavity, so that when the eject pin moves toward the accommodating cavity in the eject pin hole, a spacing between the eject pin and the circuit board in a thickness direction of the circuit board is increased through the avoidance portion. In this way, the avoidance portion avoids the circuit board during movement of the eject pin, to avoid interference or scratching between the eject pin and the circuit board, thereby solving a problem in a related technology that an eject pin is easily subjected to interference with a circuit board, resulting in a problem of difficulty in removing a card or scratching of a circuit.

In a possible implementation, the end of the eject pin facing the accommodating cavity is provided with a cut surface facing the circuit board, and the cut surface forms the avoidance portion.

In a possible implementation, the eject pin includes a body portion and an abutment portion that are connected, the abutment portion is located in the accommodating cavity, and the body portion is arranged in the eject pin hole; and the cut surface includes a first cut surface and a second cut surface, the abutment portion is provided with the first cut surface, and the body portion is provided with the second cut surface.

In a possible implementation, the first cut surface is flush with the second cut surface.

In a possible implementation, a side of the abutment portion that faces away from the avoidance portion is provided with a protrusion; the middle frame includes a mounting plate and the side wall, the side wall is provided around the mounting plate, a blocking part is arranged on the mounting plate close to the eject pin hole, and the eject pin has an assembly position at the eject pin hole; and when the eject pin enters the eject pin hole from the accommodating cavity, if the protrusion is opposite to the blocking part, a protrusion portion is configured to be opposite to the blocking part to constrain the eject pin from reaching the assembly position.

In a possible implementation, two avoidance portions are provided, and the two avoidance portions face away from each other on a periphery of the eject pin; and one of the two avoidance portions is located on a side of the eject pin facing the circuit board, and the other avoidance portion is located on a side of the eject pin that faces away from the circuit board.

In a possible implementation, in a length direction of the eject pin, an outer cross-sectional contour of the body portion is of a non-circular structure; and the eject pin hole is a non-circular hole fitting with the body portion.

In a possible implementation, the non-circular structure includes a runway shape or a polygon.

In a possible implementation, the body portion is provided with a groove, and a sealing ring is arranged in the groove.

In a possible implementation, the card tray assembly further includes a card tray, and the card tray is configured to carry a data card; the side wall of the middle frame is provided with an assembly port spaced apart from the eject pin hole, and the assembly port communicates with the accommodating cavity; when the card tray enters the accommodating cavity through the assembly port, the circuit board is opposite to the card tray, and the circuit board is electrically connected to the data card carried by the card tray; and when the card tray leaves the accommodating cavity through the assembly port, the circuit board is disconnected from the data card carried by the card tray.

In a possible implementation, the card tray assembly further includes a transmission assembly, the transmission assembly is arranged in the accommodating cavity, and the transmission assembly is in transmission connection to the card tray; in a direction from the eject pin hole to the accommodating cavity, the end of the eject pin facing the accommodating cavity is arranged opposite to the transmission assembly, and the eject pin is configured to move toward the transmission assembly and drive the card tray to leave the accommodating cavity through the assembly port by the transmission assembly.

In a possible implementation, the card tray assembly further includes a bearing seat, the bearing seat is arranged in the accommodating cavity, the bearing seat has a storage cavity, an opening for the card tray to enter or exit the storage cavity is provided at a position in the storage cavity opposite to the assembly port, and the transmission assembly and the bearing seat are arranged on a side of the circuit board.

In a possible implementation, the transmission assembly includes a rotating member and a guide rod, and the rotating member is rotatably arranged on the bearing seat; one end of the rotating member is in transmission connection with the card tray, the other end of the rotating member is connected to one end of the guide rod, and the other end of the guide rod is opposite to the end of the eject pin facing the accommodating cavity; and the guide rod is movably arranged on a side of the bearing seat.

In a possible implementation, the card tray assembly further includes an elastic member; the elastic member is arranged between the eject pin and the guide rod; and the eject pin is in elastic contact with that guide rod through the elastic member.

In a possible implementation, a pressing part is arranged at an end of the card tray that faces away from the accommodating cavity; and
when the card tray enters the storage cavity of the bearing seat through the assembly port, the pressing part covers the eject pin hole and the assembly port; and a snap-fit pin hole is provided at an end of the pressing part opposite to the eject pin hole.

In a possible implementation, a surface of the side wall of the middle frame away from the accommodating cavity is provided with a recessed region recessed into the middle frame, and a bottom of the recessed region is provided with the eject pin hole and the assembly port; and when the card tray enters the storage cavity of the bearing seat through the assembly port, the pressing part is located in the recessed region.

### BRIEF DESCRIPTION OF DRAWINGS

FIG. 1 is a schematic diagram of an overall structure of an electronic device according to an embodiment of this application;
FIG. 2 is a schematic diagram of a split structure of an electronic device according to an embodiment of this application;
FIG. 3 is a schematic diagram of a structure of a card tray assembly and a middle frame in an electronic device according to an embodiment of this application;
FIG. 4 is a schematic diagram of a split structure of a card tray assembly and a middle frame in an electronic device according to an embodiment of this application;
FIG. 5 is a schematic diagram of a structure of a middle frame, a card tray assembly, and a snap-fit pin in an electronic device according to an embodiment of this application;
FIG. 6 is a schematic split view of a card tray extending out from a card tray assembly, a middle frame, and a snap-fit pin in an electronic device according to an embodiment of this application;
FIG. 7 is a schematic diagram of a structure of ejecting a card tray from a middle frame in an electronic device according to an embodiment of this application;
FIG. 8 is a schematic diagram of splitting and assembly of a card tray assembly according to an embodiment of this application;
FIG. 9 is a schematic transmission diagram of a transmission assembly, an eject pin, a snap-fit pin, and a card tray in a card tray assembly according to an embodiment of this application;
FIG. 10 is a schematic diagram of a structure of an eject pin in a related technology;
FIG. 11 is a schematic cross-sectional view of an eject pin, a middle frame, and a circuit board in a card tray assembly in a related technology;
FIG. 12 is a schematic diagram of a structure of an eject pin in a card tray assembly according to an embodiment of this application;
FIG. 13 is a schematic cross-sectional view of an eject pin, a middle frame, and a circuit board in a card tray assembly in an electronic device according to an embodiment of this application;
FIG. 14 is a schematic diagram of another structure of an eject pin in a card tray assembly according to an embodiment of this application;
FIG. 15 is another schematic cross-sectional view of a reversely-mounted eject pin and a middle frame in an electronic device according to an embodiment of this application;
FIG. 16 is another schematic cross-sectional view of an eject pin, a middle frame, and a circuit board in a card tray assembly in an electronic device according to an embodiment of this application;
FIG. 17 is a schematic diagram of still another structure of an eject pin in a card tray assembly according to an embodiment of this application; and
FIG. 18 is a schematic diagram of yet another structure of an eject pin in a card tray assembly according to an embodiment of this application.

### Description of reference signs:

| | | |
|---|---|---|
| 100 - Card tray assembly; | | |
| 110 - Card tray; | | |
| 120 - Transmission assembly; | 121 - Rotating member; | 122 - Guide rod; |
| 130 - Eject pin; | 131 - Body portion; | 132 - Avoidance portion; |
| 133 - Abutment portion; | 1331 - Protrusion; | 134 - Groove; |
| 135 - Sealing ring; | | |
| 140 - Elastic member; | 150 - Snap-fit pin; | 151 - Snap-fit pin hole; |
| 160 - Pressing part; | 170 - Bearing seat; | 180 - Circuit board; |
| 1332 - First cut surface; | 1321 - Second cut surface; | |
| 200 - Electronic device; | | |
| 210 - Display screen; | | |
| 220 - Middle frame; | 221 - Mounting plate; | 222 - Side wall; |
| 2211 - Blocking part; | | |
| 223 - Recessed region; | 2231 - Assembly port; | 2232 - Eject pin hole; |
| 224 - Accommodating cavity; | | |
| 230 - Mainboard; | | |
| 240 - Battery; | | |
| 250 - Battery cover. | | |

### DESCRIPTION OF EMBODIMENTS

Terms used in the implementation part of this application are merely intended to explain specific embodiments of this application, and are not intended to limit this application. Implementations of the embodiments of this application are described in detail below with reference to the accompanying drawings.

Unless the context requires otherwise, the term "comprise (comprise)" and other forms thereof such as the third-person singular form "comprises (comprises)" and the present participle form "comprising (comprising)" throughout the specification and claims are construed as an open and inclusive meaning, namely, "including, but not limited to". In the description of the specification, the term "one embodiment (one embodiment)", "some embodiments (some embodiments)", "exemplary embodiments (exemplary embodiments)", "example (example)", "some examples (some examples)", or the like are intended to indicate that specific features, structures, materials, or characteristics related to the embodiment or examples are included in at least one embodiment or example of this application. The schematic representations of the above terms do not necessarily represent the same embodiment or example. Furthermore, the specific features, structures, materials, or characteristics may be included in any one or more embodiments or examples in any suitable manner.

In addition, in embodiments of this application, orientation terms such as "front" and "rear" are defined relative to an orientation in which a component is schematically placed in the accompanying drawings. It should be understood that these directional terms are relative concepts that are used for descriptive and clarity purposes, which may vary correspondingly depending on the orientation in which the components are placed in the accompanying drawings.

In the embodiments of this application, "and/or" is merely intended to describe the associated relationship of associated objects, indicating that three relationships can exist, for example, A and/or B may include three instances: A exists alone, A and B coexist, or B exists alone. In addition, the character "/" herein generally indicates an "or" relationship between the associated objects.

An embodiment of this application provides an electronic device. It can be understood that the electronic device may be a mobile or fixed terminal device such as a mobile phone, a tablet computer, a notebook computer, a personal digital assistant (Personal Digital Assistant, PDA), a smart wearable device, or a point of sale (Point of Sales, POS), or the electronic device may alternatively be a fixed terminal device such as a smart TV, a router, a server, or a switch. This is not limited in this embodiment.

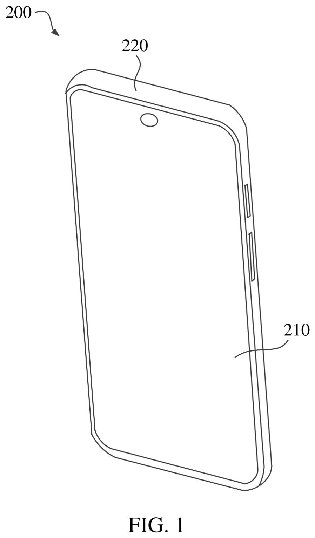

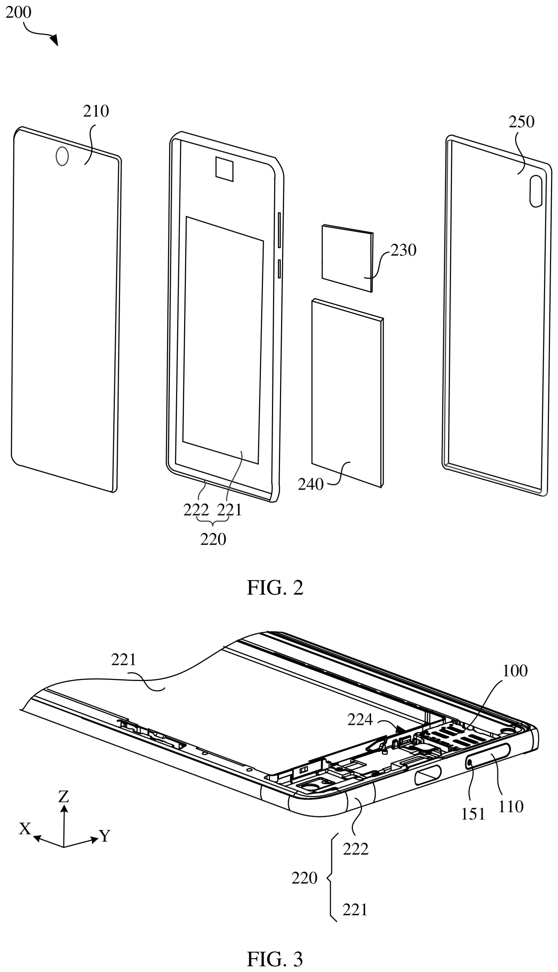

In the embodiment of this application, an example in which the electronic device 200 is a mobile phone (see FIG. 1) is used for description. FIG. 1 and FIG. 2 show an overall structure and a split structure of the electronic device 200, respectively. Referring to FIG. 1 and FIG. 2, the electronic device 200 may include a display screen 210, a middle frame 220, and a battery cover 250, where the middle frame 220 is located between the display screen 210 and the battery cover 250. An accommodating space is provided between the middle frame 220 and the battery cover 250, and components such as a mainboard 230 and a battery 240 may be arranged in the accommodating space. The battery 240 may be electrically connected to the mainboard 230. Electronic devices such as a camera, a mic, or a speaker may be arranged on the mainboard 230. It can be understood that a flexible printed circuit (not shown) is arranged in the electronic device 200. For example, a volume button, a power button, and a display screen 210 may be electrically connected to the mainboard 230 through the flexible printed circuit.

Still referring to FIG. 2, the middle frame 220 may include a mounting plate 221 and a side wall 222, and the side wall 222 is arranged around a periphery of the mounting plate 221 by one round. A material of the mounting plate 221 may include, but is not limited to, an aluminum plate, an aluminum alloy, stainless steel, a steel-aluminum composite die-casting plate, a titanium alloy, or a magnesium alloy. The side wall 222 may be a metal side wall, a ceramic side wall, or a glass side wall. When the side wall 222 is a metal side wall, a material of the metal side wall may include, but is not limited to, an aluminum alloy, stainless steel, a steel-aluminum composite die-casting plate, or a titanium alloy. The mounting plate 221 and the side wall 222 may be snap-fitted, welded, bonded or integrally formed, or the mounting plate 221 and the side wall 222 may be fixedly connected by injection molding. For example, plastic may be injected at a joint of the mounting plate 221 and the side wall 222. After being molded, the mounting plate 221 and the side wall 222 are fixed together, and a plastic member is formed between the mounting plate 221 and the side wall 222. The plastic member may be provided with a hole or form a step so as to cooperate with the display screen 210, the battery cover 250 or electronic components.

The battery cover 250 may be a metal rear cover, may be a glass rear cover, may be a plastic rear cover, or may be a ceramic rear cover. In the embodiment of this application, a material of the battery cover 250 is not limited, and is not limited to the foregoing examples.

It should be noted that, in some embodiments, the battery cover 250 of the electronic device 200 (such as a mobile phone) may be connected to the side wall 222 to form a unibody (Unibody) rear cover. For example, the electronic device 200 may include: a display screen 210, a mounting plate 221, and a battery cover 250. The battery cover 250 may include a side wall 222 and a bottom wall, and the battery cover 250 may be a rear cover formed by unibody (Unibody) forming of the side wall 222 and the bottom wall, so that the battery 240 may be located in an internal space enclosed by the mounting plate 221 and the battery cover 250.

It may be understood that the structure shown in the embodiment of this application constitutes no specific limitation on the electronic device 200. In some other embodiments of this application, the electronic device 200 (such as a mobile phone) may include more or fewer parts than those shown in the figure, some parts may be combined, some parts may be split, or there may be different part arrangements. The illustrated components may be implemented by hardware, software or a combination of software and hardware.

To implement signal transmission or provide storage and operation functions, a data card is often arranged in the electronic device 200. The data card may be, for example, a memory card, a subscriber identity module (subscriber identity module, SIM) card, or another chip card.

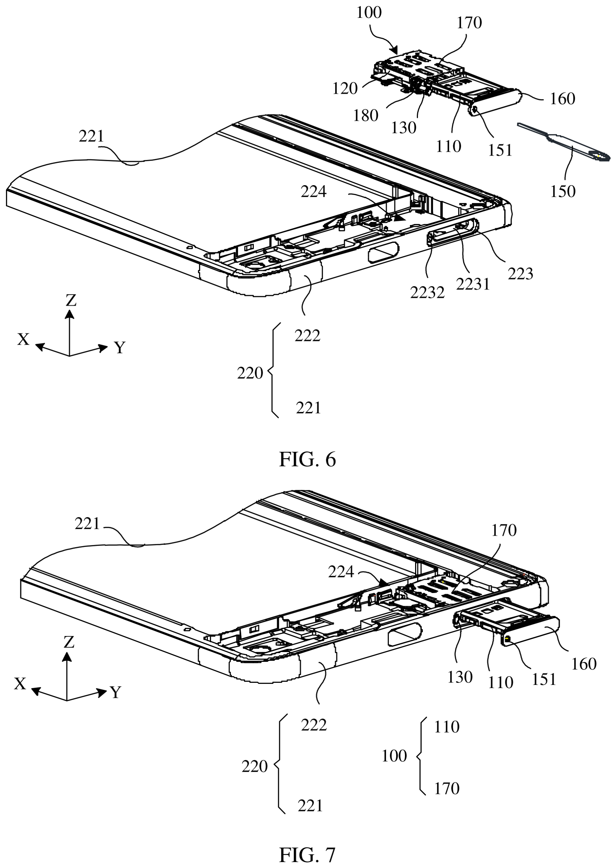

In the embodiment of this application, an example in which the data card is an SIM card is used for description. To facilitate removal of the SIM card from or placing of the SIM card in the electronic device 200, as shown in FIG. 3, the middle frame 220 surrounds to form an accommodating cavity 224, and a card tray assembly 100 is arranged in the accommodating cavity 224. The SIM card may be placed in the card tray assembly 100, and the card tray assembly 100 is arranged in the accommodating cavity 224 and is located on the mounting plate 221. To remove or place the SIM card, the card tray assembly 100 may include a card tray 110, and the card tray 110 is configured to carry the SIM card. The card tray 110 may move from the inside of the accommodating cavity 224 of the middle frame 220 to the outside of the accommodating cavity 224. In this case, the card tray 110 is in an extended state. The card tray 110 may alternatively move from the outside of the accommodating cavity 224 of the middle frame 220 to the inside of the accommodating cavity 224. In this case, the card tray 110 is in a retracted state. Therefore, the card tray 110 may have two states, one is the retracted state (see FIG. 3) and the other is the extended state (see FIG. 7 below, for example).

It should be noted that, in FIG. 3, an upward side in a Z direction is connected to the battery cover 250, and a downward side in the Z direction is connected to the display screen 210. Therefore, the card tray assembly 100 is located between the mounting plate 221 and the battery cover 250.

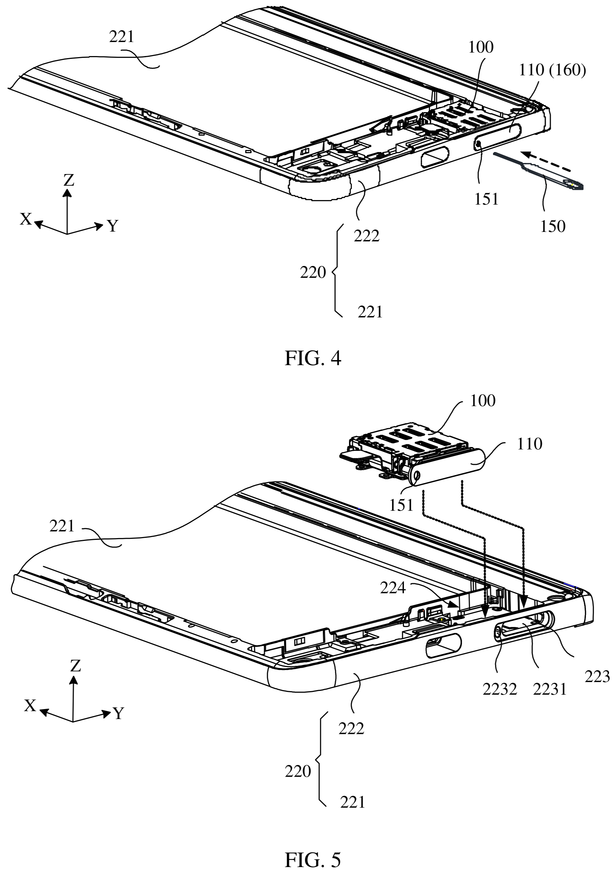

In the embodiment of this application, as shown in FIG. 3, an end of the card tray 110 facing an outer side of the side wall 222 of the middle frame 220 is provided with a snap-fit pin hole 151. Therefore, when the card tray 110 needs to be removed from the electronic device, as shown in FIG. 4, a snap-fit pin 150 is further included. An end of the snap-fit pin 150 is inserted into the snap-fit pin hole 151 in a direction of the dashed arrow to drive a transmission assembly in the card tray assembly 100 to apply an acting force on the card tray 110. The acting force drives the card tray 110 to extend outward from the inside of the accommodating cavity 224 of the middle frame 220.

To extend the card tray 110 from the inside of the accommodating cavity 224 to the outside of the accommodating cavity 224, as shown in FIG. 5, the side wall 222 of the middle frame 220 is provided with an assembly port 2231, and the assembly port 2231 communicates with the accommodating cavity 224. The card tray 110 penetrates into the assembly port 2231, and the card tray 110 is movably arranged at the assembly port 2231. It can be understood that when an end of the card tray 110 is moved into the electronic device (see FIG. 4), as shown in FIG. 5, a dimension of an end of the card tray 110 facing the outside of the electronic device in a Y direction is larger than that of the assembly port 2231 in the Y direction. For example, the end of the card tray 110 facing the outside of the electronic device can cover the assembly port 2231. The end of the card tray 110 facing the outside of the electronic device further includes a portion extending in the Y direction in addition to a region opposite to the assembly port 2231, and the snap-fit pin hole 151 is provided in the portion of the card tray 110 that extends in the Y direction. In this way, the snap-fit pin hole 151 and the assembly port 2231 are staggered in an X direction, and there is no overlapping region, so that the movement of the card tray 110 at the assembly port 2231 is not disturbed when the snap-fit pin 150 extends into the snap-fit pin hole 151.

It can be understood that, as shown in FIG. 5, a charging interface of the electronic device and the assembly port 2231 may be located in the same side wall 222. Of course, in some examples, the assembly port 2231 may alternatively be provided in another side wall 222 of the middle frame 220. For example, the assembly port may be provided in a left side wall or a right side wall of the middle frame 220, or in a top side wall of the middle frame 220.

In the embodiment of this application, as shown in FIG. 5, the side wall 222 of the middle frame 220 is provided with an eject pin hole 2232 at a position opposite to the snap-fit pin hole 151, and the eject pin hole 2232 communicates with the accommodating cavity 224. The eject pin hole 2232 and the snap-fit pin hole 151 are arranged face to face in the X direction. Through the provision of the eject pin hole 2232 and the snap-fit pin hole 151, a channel that communicates the inside of the accommodating cavity 224 with the outside is formed in the side wall 222 of the middle frame 220. Therefore, as shown in FIG. 6, when the snap-fit pin 150 penetrates through the snap-fit pin hole 151 into the eject pin hole 2232 in the side wall 222, an acting force in the X direction is applied on the transmission assembly 120 of the card tray assembly 100, and the transmission assembly 120 drives the card tray 110 to move in a negative X direction under the acting force.

It can be understood that since the eject pin hole 2232 is opposite to the snap-fit pin hole 151 in the card tray 110, an end of the card tray 110 that is provided with the snap-fit pin hole 151 can cover both the eject pin hole 2232 and the assembly port 2231. When the card tray 110 is in a retracted state, the eject pin hole 2232 and the assembly port 2231 are not visible in appearance under the covering by the end of the card tray 110.

In the embodiment of this application, as shown in FIG. 6, a card slot (not shown in the figure) may be provided in the card tray 110, and a shape of the card slot may be the same as that of another chip card such as a memory card. It can be understood that a dimension of the card slot may be less than or equal to that of the another chip card such as the memory card, and the another chip card such as the memory card can be placed on the card tray 110. In addition, a depth of the card slot should be the same as a thickness of the another chip card such as the memory card, so that the another chip card such as the memory card can be flush with the card tray 110 after being placed on the card tray 110, thereby saving an internal space of the electronic device 200. In the embodiment of this application, there may be one or more card slots, the number of card slots is not limited in the embodiment of this application.

In the embodiment of this application, after the card tray 110 is moved into the electronic device, since an outward end of the card tray 110 is exposed on the side wall 222 of the middle frame 220 (as shown in FIG. 4), to ensure an aesthetic appearance of the side wall 222 of the middle frame 220, a diameter of the snap-fit pin 150 and an inner diameter of the snap-fit pin hole 151 are often set very small. However, when the snap-fit pin 150 has a smaller diameter, there is a smaller contact area between the snap-fit pin 150 and the transmission assembly of the card tray assembly 100. As a result, on the one hand, when the snap-fit pin 15 applies an acting force on the transmission assembly 120 (see FIG. 6), there is a smaller contact surface between the snap-fit pin 150 and the transmission assembly 120, so that there is an insufficient acting force when the snap-fit pin 150 drives the transmission assembly 120, resulting in difficulty in removing or mounting a card. On the other hand, due to a smaller contact area between the snap-fit pin 150 and the transmission assembly 120 of the card tray assembly 100, under the same applied force, there is a higher pressure of the snap-fit pin 150 on the transmission assembly 120. After use for many times, a stressed surface of the transmission assembly 120 is easily subjected to damage, thereby reducing the service life of the transmission assembly 120. When the transmission assembly 120 is damaged, the card tray assembly 100 needs to be disassembled for replacement. However, it is complicated to disassemble the card tray assembly 100 after assembly, so that it is difficult to replace the transmission assembly 120, thereby affecting card removal.

In view of this, as shown in FIG. 6, the card tray assembly 100 further includes a transmission assembly 120 and a bearing seat 170. A storage cavity for accommodating the card tray110 is provided in the bearing seat 170, and an end of the card tray 110 is slidably connected in an accommodating cavity of the bearing seat 170. An opening (not shown) for the card tray 110 to enter or exit the storage cavity is provided at a position in the storage cavity of the bearing seat 170 opposite to the assembly port 2231. The transmission assembly 120 is arranged on the bearing seat 170. For example, as shown in FIG. 6, the transmission assembly 120 may be located on a side surface of the bearing seat 170, and the transmission assembly 120 and the snap-fit pin hole 151 may be arranged oppositely in the X direction.

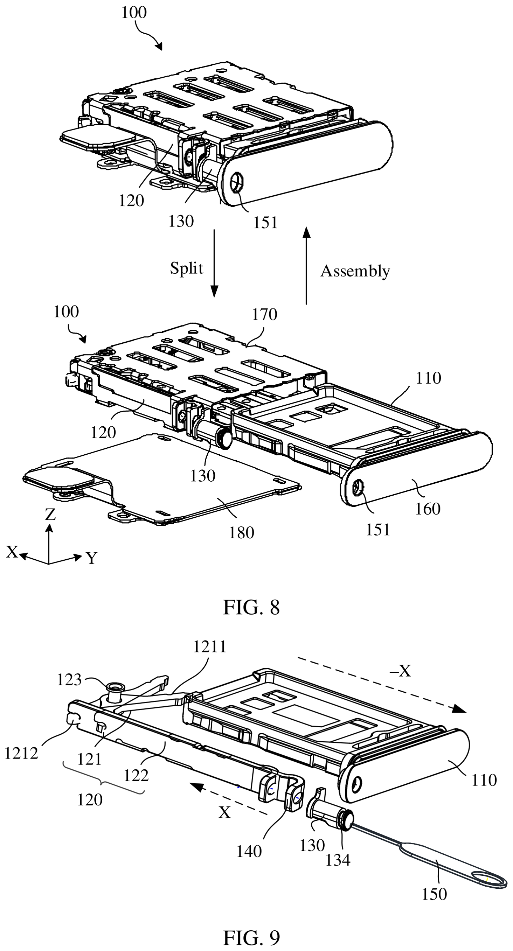

To increase a stressed area between the snap-fit pin 150 and the transmission assembly 120, as shown in FIG. 6, the electronic device further includes an eject pin 130. The eject pin 130 is movably arranged in the eject pin hole 2232, and the eject pin 130 is located between the transmission assembly 120 and the snap-fit pin hole 151. For example, as shown in FIG. 7, an eject pin 130 is movably arranged in the eject pin hole 2232 (see FIG. 6). An end of the eject pin 130 facing the outside of the middle frame 220 is located in the eject pin hole 2232 and is opposite to the snap-fit pin hole 151, and an end of the eject pin 130 facing the accommodating cavity 224 abuts against an end of the transmission assembly 120 (see FIG. 8). In this way, an outer diameter of the eject pin 130 may be larger than that of the snap-fit pin 150, and correspondingly, an inner diameter of the eject pin hole 2232 may be larger than that of the snap-fit pin hole 151. The eject pin 130 is added between the snap-fit pin 150 and the transmission assembly 120. Since the outer diameter of the eject pin 130 is larger than that of the snap-fit pin 150, the contact area between the eject pin 130 and the transmission assembly 120 is increased. When the snap-fit pin 150 passes through the snap-fit pin hole 151 to apply an acting force on the eject pin 130, the eject pin 130 drives the transmission assembly 120 to move, so as to drive the card tray 110 to move out of the accommodating cavity 224. This avoids an insufficient driving force caused by a small contact area between the snap-fit pin 150 and the transmission assembly 120, which otherwise affects the removal of the card tray 110. On the other hand, since the eject pin 130 is movably arranged in the eject pin hole 2232, convenience in replacement is implemented.

It can be understood that, in addition to that the end of the eject pin 130 facing the accommodating cavity 224 is in abutting fit with an end of the transmission assembly 120, in some examples, a certain gap may be provided between the end of the eject pin 130 facing the accommodating cavity 224 and the end of the transmission assembly 120. For example, when no acting force is applied on the eject pin 130 by the snap-fit pin 150, the end of the eject pin 130 facing the accommodating cavity 224 may not be in contact with the end of the transmission assembly 120, but only when an acting force is applied on the eject pin 130 by the snap-fit pin 150, the eject pin is in contact with the end of the transmission assembly 120.

In addition, when the card tray 110 enters the accommodating cavity 224 from the assembly port 2231, as shown in FIG. 7, the end of the card tray 110 that is provided with the snap-fit pin hole 151 covers an outward end of the eject pin 130. Therefore, when the outer diameter of the eject pin 130 is set large, an appearance of an outer surface of the side wall 222 of the electronic device is not affected.

In the embodiment of this application, as shown in FIG. 7, a pressing part 160 is arranged at an end of the card tray 110 that faces away from the accommodating cavity 224, and the pressing part 160 may be located on an outward side of the assembly port 2231. When the card tray 110 enters the accommodating cavity 224 from the assembly port 2231, the pressing part 160 covers the eject pin hole 2232 and the assembly port 2231 (as shown in FIG. 4).

In the embodiment of this application, to ensure smooth transition between an outer surface of the pressing part 160 and the outer surface of the side wall 222 with the assembly port 2231, still referring to FIG. 6, a recessed region 223 recessed inward is formed in the side wall 222 with the assembly port 2231, and a bottom surface of the recessed region 223 is provided with the assembly port 2231 and the eject pin hole 2232 that are spaced apart. Therefore, when the card tray 110 enters the accommodating cavity 224 from the assembly port 2231, the pressing part 160 of the card tray 110 is located in the recessed region 223. A recession depth of the recessed region 223 is related to a thickness of the pressing part 160 in the X direction. For example, the recession depth of the recessed region 223 may be the same as a thickness of the pressing part 160 in the X direction. In this way, the outer surface of the pressing part 160 can be flush with the outer surface of the side wall 222 with the assembly port 2231 when the card tray 110 is in a retracted state. This ensures that when the card tray 110 is in the retracted state, the outer surface of the side wall 222 of the middle frame 220 is smooth.

It can be understood that a user may manually press the pressing part 160 after removing or place the card, so that the card tray 110 enters the accommodating cavity 224 from the assembly port 2231, and the pressing part 160 is located in the recessed region 223.

In the embodiment of this application, as shown in FIG. 7, the pressing part 160 is provided with a snap-fit pin hole 151 at a position opposite to the eject pin 130, and the snap-fit pin hole 151 penetrates through an inner surface and the outer surface of the pressing part 160 in the X direction.

In the embodiment of this application, to facilitate electrical connection between a data card (such as an SIM card) carried on the card tray 110 and the mainboard 230 in the electronic device, as shown in FIG. 8, the card tray assembly 100 further includes a circuit board 180, and the circuit board 180 may be arranged in the accommodating cavity 224. The circuit board 180 is connected to a surface of the bearing seat 170 in a Z direction. For example, in FIG. 8, the circuit board 180 is located at a bottom surface of the bearing seat 170, and a surface of the bearing seat 170 opposite to the circuit board 180 is provided with a hollowed-out area. In this way, when the card tray 110 enters the accommodating cavity 224 through the assembly port 2231, a conductive pin of the SIM card on the card tray 110 may be electrically connected to the circuit board 180 at the hollowed-out area through a conductive elastic sheet or a contact. When the card tray 110 leaves the accommodating cavity 224 through the assembly port 2231, the circuit board 180 is disconnected from the data card carried by the card tray 110.

In the embodiment of this application, as shown in FIG. 8, the transmission assembly 120 and the bearing seat 170 are arranged on a side of the circuit board 180. For example, in FIG. 8, the transmission assembly 120 and the bearing seat 170 are arranged on an upward side of the circuit board 180 (for example, a side of the circuit board 180 facing the battery cover 250).

It can be understood that the circuit board 180 may be a flexible printed circuit (flexible printed circuit, FPC) or a printed circuit board (printed circuit board, PCB). It should be noted that, when the circuit board 180 is a flexible printed circuit, to enhance the strength of the flexible printed circuit, a reinforcing plate may be arranged on a side of the circuit board 180 that faces away from the bearing seat 170.

The circuit board 180 may be fixedly connected to the bearing seat 170 by snap-fit, welding, bonding, or the like.

In the embodiment of this application, the structure of the transmission assembly 120 of the card tray assembly 100 can be shown with reference to FIG. 9, and the transmission assembly 120 may include a rotating member 121 and a guide rod 122. The rotating member 121 may be rotatably arranged on the bearing seat 170. A first end 1211 of the rotating member 121 may be in transmission connection (for example, abutting) with the card tray 110, a second end 1212 of the rotating member 121 may be connected to one end of the guide rod 122, and the other end of the guide rod 122 abuts against an end of the eject pin 130 facing the accommodating cavity 224. It should be noted that the guide rod 122 may be located on a side of the card tray 110 in the X direction, and the guide rod 122 is movably arranged on a side of the bearing seat 170.

Referring to FIG. 9, the transmission assembly 120 may include a rotating shaft 123, and the rotating member 121 may be rotatably connected to the bearing seat 170 through the rotating shaft 123. The first end 1211 and the second end 1212 of the rotating member 121 rotate horizontally relative to the rotating shaft 123.

When the card tray 110 needs to be ejected, the snap-fit pin 150 applies an acting force on the eject pin 130, and the eject pin 130 drives one end of the guide rod 122 in the X direction. As a result, the guide rod 122 moves in the X direction, and the other end of the guide rod 122 drives the second end 1212 of the rotating member 121 to move. The second end 1212 of the rotating member 121 moves to drive the first end 1211 of the rotating member 121 to rotate, and the rotation of the first end 1211 of the rotating member 121 drives the card tray 110 to move out of the accommodating cavity 224 in the negative X direction. Therefore, the guide rod 122 can drive the rotating member 121 to rotate in the X direction, and then drive the other end of the rotating member 121 to rotate, so that the card tray 110 is ejected.

It can be understood that after an external force on the snap-fit pin 150 is removed, to facilitate reset of the guide rod 122 and the eject pin 130, an elastic member (not shown) is arranged between the rotating member 121 and the rotating shaft 123. The elastic member may be, for example, a torsion spring. In this way, when the external force on the snap-fit pin 150 is removed, an elastic force of the elastic member drives the second end 1212 of the rotating member 121 to move in the negative X direction, to drive the guide rod 122 and the eject pin 130 to reset.

It can be understood that the structure of the transmission assembly 120 shown in FIG. 9 may alternatively be another structure. For example, the transmission assembly 120 may further include a slide rail (not shown) and a sliding rod (not shown) arranged in the slide rail to cooperate with a cam to drive the card tray 110. In the embodiment of this application, the structure of the transmission assembly 120 includes, but is not limited to, the structure shown in FIG. 9.

In the embodiment of this application, when the eject pin 130 is in contact with an end of the transmission assembly 120 (for example, an end of the guide rod 122) in the X direction, the eject pin 130 is in hard contact with an end of the transmission assembly 120, which is likely to cause wear. In view of this, as shown in FIG. 9, the card tray assembly 100 may further include an elastic member 140. The elastic member 140 may be arranged between the eject pin 130 and the transmission assembly 120, so that the eject pin 130 may be in elastic contact with the transmission assembly 120 through the elastic member 140. When the eject pin 130 moves toward the accommodating cavity 224, the end of the eject pin 130 facing the accommodating cavity 224 is in contact with the elastic member 140, and the elastic member 140 is compressed and drives the transmission assembly 120, thereby further driving the card tray 110 abutting against the transmission assembly 120 to move in the negative X direction, so that the card tray 110 is ejected from the electronic device 200. It can be understood that the elastic member 140 is arranged between the eject pin 130 and the transmission assembly 120, so that the contact between the eject pin 130 and the transmission assembly 120 can be buffered, thereby reducing wear of the transmission assembly 120 and the eject pin 130.

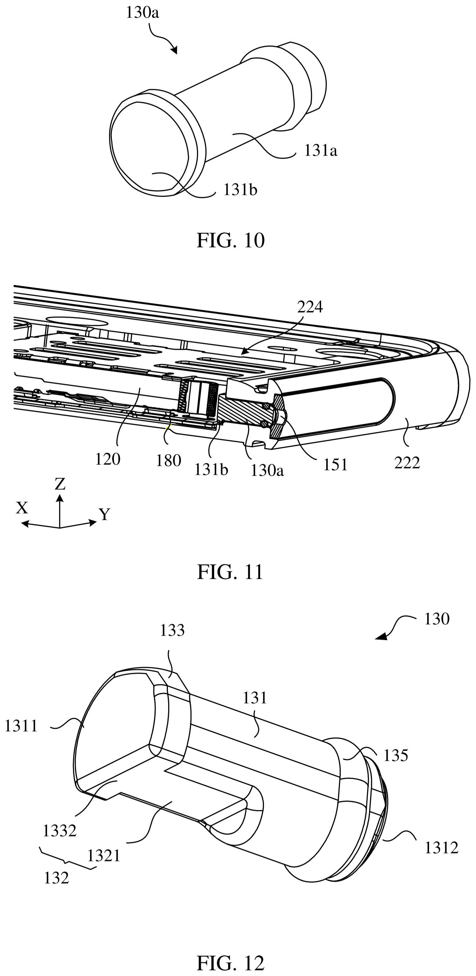

In a related technology, an eject pin 130a is provided. A structure of the eject pin 130a is shown in FIG. 10, and the eject pin 130a includes a body portion 131a and an abutment portion 131b. The body portion 131a is of a cylindrical structure, and the abutment portion 131b is configured to abut against the transmission assembly 120. As shown in FIG. 11, when the eject pin 130a moves in the X direction under driving of an external force (for example, an acting force applied on the eject pin 130a by the snap-fit pin 150), since an end of the eject pin 130a facing the accommodating cavity 224 partially overlaps the circuit board 180 in the Z direction, with the development of the electronic device toward miniaturization and lightening and thinning, a space of the electronic device in a thickness direction (for example, the Z direction) is continuously compressed, resulting in a limited internal space of the electronic device. This causes a smaller spacing between the abutment portion 131b of the eject pin 130a and the circuit board 180, so that during movement of the eject pin 130a toward the accommodating cavity 224, the abutment portion 131b of the eject pin 130a is easily subjected to interference with the circuit board 180, resulting in a problem such as difficulty in removing a card or scratching of the circuit board 180. In view of this, some measures are to reduce an outer diameter of the eject pin 130a (for example, to reduce an outer diameter of the abutment portion 131b of the eject pin 130a). However, when the outer diameter of the eject pin 130a is reduced, an area of an end surface of the eject pin 130 in contact with the transmission assembly 120 becomes small, so that a contact surface between the eject pin 130 and the transmission assembly 120 is reduced. This causes an insufficient acting force when the eject pin 130 drives the transmission assembly 120, resulting in difficulty in removing or mounting a card.

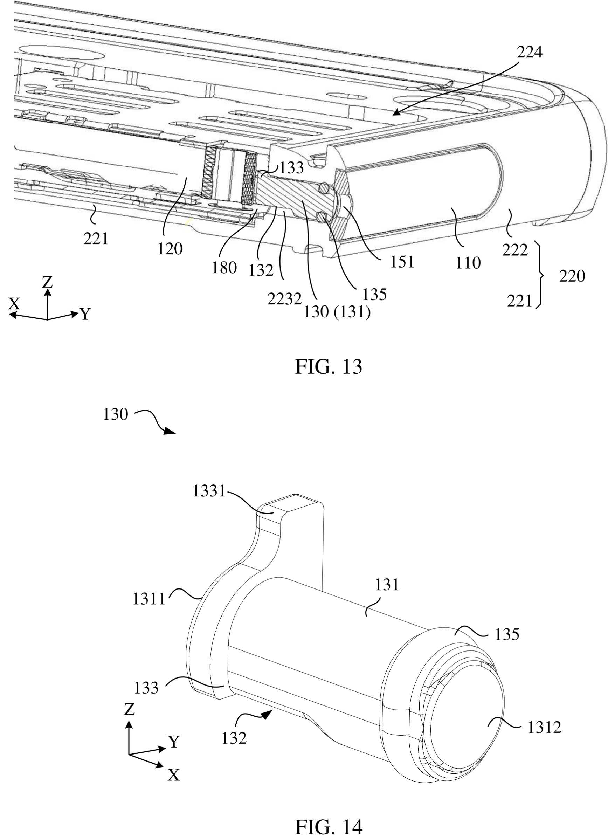

In view of this, to solve the above problems, as shown in FIG. 12 and FIG. 13, an embodiment of this application provides an eject pin 130. The eject pin 130 is movably arranged in an eject pin hole 2232. The eject pin 130 has two ends. One end 1311 of the eject pin 130 faces the accommodating cavity 224, and the other end 1312 of the eject pin 130 faces the outer surface of the side wall 222 of the middle frame 220 (for example, a surface of the side wall 222 that faces away from the accommodating cavity 224). One end 1311 of the eject pin 130 facing the accommodating cavity 224 can abut against an end of the guide rod 122 of the transmission assembly 120, and the other end 1312 of the eject pin 130 is located in the eject pin hole 2232.

To prevent the eject pin 130 from interfering with the circuit board 180 during movement, as shown in FIG. 12, an avoidance portion 132 is arranged on a periphery of an end 1311 of the eject pin 130 facing the accommodating cavity 224. As shown in FIG. 13, the avoidance portion 132 faces the circuit board 180. In this way, when the eject pin 130 moves in the eject pin hole 2232 toward the accommodating cavity 224, a spacing between the eject pin 130 and the circuit board 180 in the Z direction is increased by the avoidance portion 132. In this way, the circuit board 180 is avoided by the avoidance portion 132 during the movement of the eject pin 130, to prevent the eject pin 130 from interfering with the circuit board 180, thereby solving a problem in a related technology that the eject pin 130a is easily subjected to interference with the circuit board 180, resulting in a problem of difficulty in removing a card or scratching of the circuit board 180.

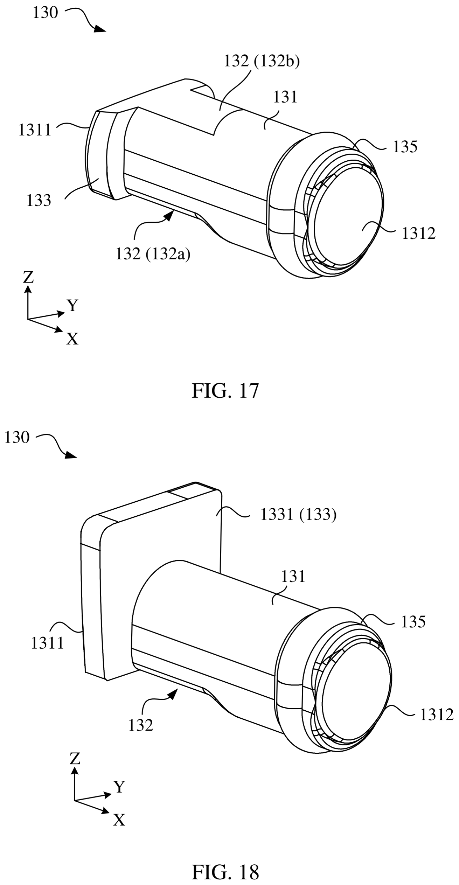

It can be understood that in the embodiment of this application, there may be one or more avoidance portions 132. In the embodiment of this application, specifically, an example in which there is one avoidance portion 132 is used for description. For a scenario where there are two avoidance portions 132, reference may be made to the following description of FIG. 17.

In the embodiment of this application, as shown in FIG. 12, the avoidance portion 132 may be an avoidance space formed after the periphery of the end of eject pin 130 facing the accommodating cavity 224 is partially cut off. A length of the avoidance portion 132 in the X direction (for example, an axial direction of the eject pin 130) may be set as required, to ensure that there is an avoidance portion 132 between the eject pin 130 and the circuit board 180 during movement of the eject pin 130 to avoid the circuit board 180.

In a possible implementation, as shown in FIG. 12 and FIG. 13, the end 1311 of the eject pin 130 facing the accommodating cavity 224 is provided with a cut surface facing the circuit board 180, and the cut surface forms the avoidance portion 132.

In a possible implementation, as shown in FIG. 12, the eject pin 130 includes a body portion 131 and an abutment portion 133 that are connected. The body portion 131 has two ends. The abutment portion 133 is located at one end of the body portion 131, and the other end of the body portion 131 is the end 1312 of the eject pin 130 facing the outside of the middle frame 220.

In the embodiment of this application, as shown in FIG. 13, the abutment portion 133 is located in the accommodating cavity 224, and the body portion 131 is located in the eject pin hole 2232. The body portion 131 abuts against an end of the guide rod 122 of the transmission assembly 120 through the abutment portion 133.

Still referring to FIG. 12, when the eject pin 130 includes a body portion 131 and an abutment portion 133, and when the end 1311 of the eject pin 130 facing the accommodating cavity 224 is provided with a cut surface, the cut surface includes a first cut surface 1332 and a second cut surface 1321. A side of the abutment portion 133 facing the circuit board 180 has the first cut surface 1332, and a periphery of an end of the body portion 131 connected to the abutment portion 133 has the second cut surface 1321.

In the embodiment of this application, the first cut surface 1332 and the second cut surface 1321 are flush, so that both the first cut surface 1332 and the second cut surface 1321 avoid the circuit board 180.

Of course, in some examples, there may be a height difference between the first cut surface 1332 and the second cut surface 1321. For example, when the eject pin 130 moves toward the middle frame 220, a distance between the first cut surface 1332 and the circuit board 180 is greater than a distance between the second cut surface 1321 and the circuit board 180.

In the embodiment of this application, for example, in FIG. 12, the first cut surface 1332 and the second cut surface 1321 are both flat surfaces, and in some examples, the first cut surface 1332 and the second cut surface 1321 may alternatively be recessed surfaces recessed away from the circuit board 180.

In the embodiment of this application, the abutment portion 133 may be a protruding structure formed by an end of the body portion 131 that protrudes in a radial direction of the eject pin 130. It should be noted that, when the end of the body portion 131 protrudes in the radial direction of the eject pin 130, a periphery of the avoidance portion 132 does not protrude outward in the radial direction of the eject pin 130. Therefore, the formed protruding structure has the first cut surface 1332, and the first cut surface 1332 is used as a part of the avoidance portion 132.

In the embodiment of this application, as shown in FIG. 13, the body portion 131 of the eject pin 130 may be located in the eject pin hole 2232, and the abutment portion 133 is located outside the eject pin hole 2232 and is configured to cooperate with the transmission assembly 120. In the embodiment of this application, the abutment portion 133 is formed by protruding outward from a periphery of the body portion 131, so that a partial outer contour dimension of the abutment portion 133 in a circumferential direction of the abutment portion is larger than a dimension of the eject pin hole 2232 and exceeds a dimension of the periphery of the body portion 131. Therefore, on the one hand, it is ensured that the abutment portion 133 of the eject pin 130 cannot extend into the eject pin hole 2232, and the abutment portion 133 limits movement of the eject pin 130 in the eject pin hole 2232. On the other hand, as the dimension of the abutment portion 133 increases in the circumferential direction of the abutment portion, a direct contact area between the abutment portion 133 and the transmission assembly 120 can be increased.

It can be understood that due to a limited space in the electronic device, when the abutment portion 133 protrudes outward from the periphery of the body portion 131, the dimension of the protrusion is set based on an actual space in the electronic device, and the dimension of the abutment portion 133 should not interfere with other components of the electronic device.

In the embodiment of this application, as shown in FIG. 13, the abutment portion 133 is formed by protruding outward from the periphery of the body portion 131. Therefore, during assembly of the eject pin 130, the eject pin 130 is first placed in the accommodating cavity 224 of the middle frame 220, and the body portion 131 of the eject pin 130 is mounted into the eject pin hole 2232 in the negative X direction. Since an outer diameter of the abutment portion 133 is larger than that of the eject pin hole 2232, when the eject pin 130 is assembled in place in the eject pin hole 2232, the abutment portion 133 is attached to an inner surface of the side wall 222 facing the accommodating cavity 224, and the abutment portion 133 is located in the accommodating cavity 224 and does not extend into the eject pin hole 2232. Next, the card tray assembly 100 may be assembled into the accommodating cavity 224, and the card tray 110 of the card tray assembly 100 may penetrate into the assembly port 2231 provided in the side wall 222.

In the embodiment of this application, the eject pin 130 is easily subjected to reverse mounting when assembled into the eject pin hole 2232. For example, if the avoidance portion 132 of the eject pin 130 faces away from the circuit board 180, the position of the avoidance portion 132 of the eject pin 130 is changed, so that the circuit board 180 cannot avoided. On the other hand, if the eject pin 130 is reversely mounted, the eject pin 130 needs to be remounted, which reduces assembly efficiency.

Therefore, to solve the above problems, based on the above embodiment, as shown in FIG. 14, a protrusion 1331 is provided on a side of the abutment portion 133 that faces away from the avoidance portion 132, and the protrusion 1331 protrudes outward in a Z direction. A blocking part 2211 is arranged at a position at the mounting plate 221 of the middle frame 220 close to the eject pin hole 2232.

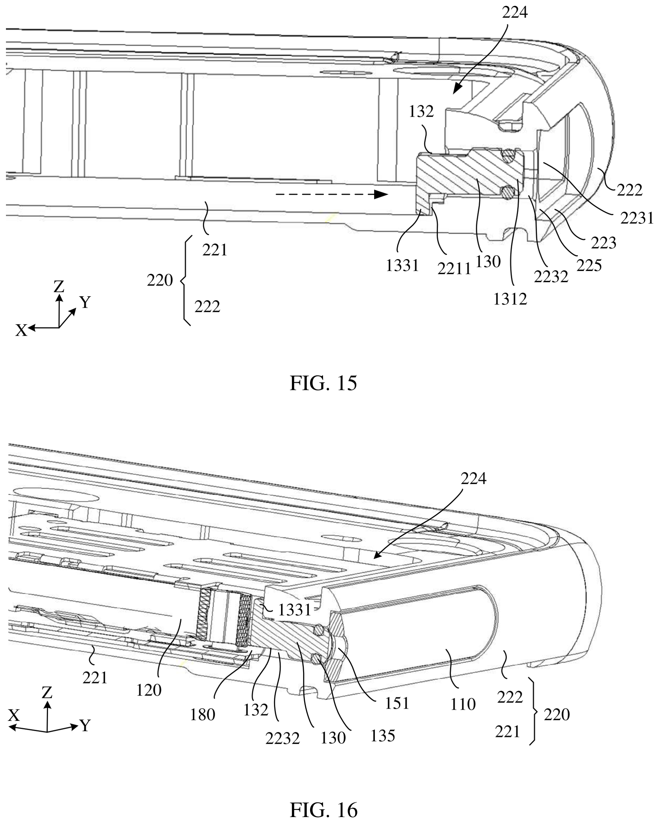

For example, as shown in FIG. 15, during assembly, the eject pin 130 is placed in the accommodating cavity 224 of the middle frame 220. When the eject pin 130 enters the eject pin hole 2232 from the accommodating cavity 224, for example, the eject pin 130 is assembled into the eject pin hole 2232 in a direction of the dashed arrow in FIG. 15. If the protrusion 1331 is opposite to the blocking part 2211, and the protrusion 1331 is opposite to the blocking part 2211 to constrain the eject pin 130 from reaching an assembly position, that is, if the eject pin 130 is reversely mounted (for example, in FIG. 15, the avoidance portion 132 of the eject pin 130 is upward, the protrusion 1331 is downward, and the protrusion 1331 is opposite to the blocking part 2211), the protrusion 1331 on the abutment portion 133 is blocked by the blocking part 2211. As a result, the eject pin 130 cannot continue to be assembled into the eject pin hole 2232. The eject pin 130 has an assembly position in the eject pin hole 2232, and an end of the eject pin 130 facing the outer surface of the side wall 222 may be the assembly position reached by the eject pin 130 in the eject pin hole 2232 when flush with a bottom 225 of the recessed region 223. Therefore, when the blocking part 2211 blocks the protrusion 1331 on the abutment portion 133, the eject pin 130 does not reach the assembly position in the eject pin hole 2232. In this case, it is determined based on the position of the eject pin 130 in the eject pin hole 2232 that the eject pin 130 is not mounted in place in the eject pin hole 2232. In this case, it can be determined that the eject pin 130 is reversely mounted in the eject pin hole 2232, and then an assembly direction of the eject pin 130 is adjusted. For example, as shown in FIG. 16, the avoidance portion 132 may face the circuit board 180, and the protrusion 1331 on the abutment portion 133 may face away from the circuit board 180, to complete correct assembly of the eject pin 130.

Therefore, in the embodiment of this application, the protrusion 1331 that faces away from the avoidance portion 132 is provided on the abutment portion 133, so that the problem that the eject pin 130 is reversely mounted in the eject pin hole 2232 and is still subjected to interference or scratching with the circuit board 180 can be avoided.

In the embodiment of this application, since the body portion 131 of the eject pin 130 is movable in the eject pin hole 2232, there is no interference fit between the body portion 131 of the eject pin 130 and the eject pin hole 2232. For example, there is a gap between the body portion 131 of the eject pin 130 and the eject pin hole 2232, but when the body portion 131 of the eject pin 130 is cylindrical, the eject pin 130 is easily subjected to rotation in the eject pin hole 2232 during use. When the eject pin 130 rotates, the avoidance portion 132 on the eject pin 130 also rotates away from the circuit board 180. For example, the avoidance portion 132 and the circuit board 180 are not arranged face to face, so that the eject pin 130 still interferes with the circuit board 180 during sliding.

In view of this, to solve the above problems, in the embodiment of this application, the eject pin hole 2232 is provided as a hole with a non-circular structure. For example, the eject pin hole 2232 may be a runway-shaped hole or an elliptical hole. Correspondingly, an outer cross-sectional contour of the body portion 131 of the eject pin 130 is also of a non-cylindrical structure. The body portion 131 of the eject pin 130 may be fitted with the shape of the eject pin hole 2232. For example, the body portion 131 of the eject pin 130 may be a column with an outer cross-sectional contour being of a runway-shaped or elliptical structure. In this way, on the one hand, the body portion 131 of the eject pin 130 is not easily subjected to rotation inside the eject pin hole 2232. On the other hand, during assembly, based on structural fit between the eject pin hole 2232 and the body portion 131 of the eject pin 130, the probability of reverse or wrong mounting of the eject pin 130 is reduced. In this way, combined with a fool-proofing function of the protrusion 1331 of the eject pin 130, assembly accuracy of the eject pin 130 is improved.

In the embodiment of this application, as shown in FIG. 16, the snap-fit pin hole 151 may be a circular hole, and the snap-fit pin hole 151 and the eject pin hole 2232 may be coaxially provided in the X direction.

In the embodiment of this application, the eject pin 130 can be prevented from being reversely mounted by providing the protrusion 1331. In another possible implementation, two avoidance portions 132 may alternatively be provided to correctly assemble the eject pin 130. For example, as shown in FIG. 17, there may be two avoidance portions 132. For example, an avoidance portion 132a and an avoidance portion 132b are provided on two sides of an end of the eject pin 130 facing the accommodating cavity 224 respectively in the Z direction. In this way, during assembly, there is no problem of reverse mounting of the eject pin 130. For example, the eject pin 130 may be assembled based on the orientation shown in FIG. 17, so that the avoidance portion 132a of the eject pin 130 may face the circuit board 180, and the avoidance portion 132a avoids the circuit board 180. In this case, the avoidance portion 132b is upward. Alternatively, the eject pin 130 in FIG. 17 may be assembled by rotating by 180°, so that the avoidance portion 132b of the eject pin 130 can face the circuit board 180, and the avoidance portion 132b avoids the circuit board 180. In this case, the avoidance portion 132a faces away from the circuit board 180. Therefore, the two avoidance portions 132 are provided, so that reverse mounting of the eject pin 130 can be avoided, and assembly efficiency of the eject pin 130 can be improved.

It can be understood that when the two avoidance portions 132 are arranged on the eject pin 130, the dimension of the abutment portion 133 of the eject pin 130 is reduced, and an area of the abutment portion 133 of the eject pin 130 in contact with the transmission assembly 120 is reduced compared with that when the eject pin 130 is provided with one avoidance portion 132. Therefore, as shown in FIG. 17, the abutment portion 133 may protrude outward in the Y direction to increase an abutment area between the abutment portion 133 and the transmission assembly 120.

In the embodiment of this application, when a protrusion 1331 is provided on the abutment portion 133 of the eject pin 130, as shown in FIG. 14, a partial region of the abutment portion 133 forms a bump along the protrusion 1331 in the Z direction, and a width of the protrusion 1331 in the Y direction is smaller than that of the abutment portion 133 in the Y direction. Alternatively, in some examples, as shown in FIG. 18, two sides of the abutment portion 133 in the Y direction protrude outward in the Z direction, and the width of the formed protrusion 1331 in the Y direction is the same as that of the abutment portion 133. For example, an end of the abutment portion 133 in the Z direction is used as a protrusion 1331, so that an abutting area of the abutment portion 133 can be increased on the one hand, and the movement of the eject pin 130 in the eject pin hole 2232 is better limited on the other hand.

In the embodiment of this application, to prevent a liquid from entering the electronic device from the eject pin hole 2232, as shown in FIG. 18, a sealing ring 135 may be sleeved on the periphery of the body portion 131 of the eject pin 130, so that after the eject pin 130 is located in the eject pin hole 2232, the sealing ring 135 is located between the body portion 131 of the eject pin 130 and the inner wall of the eject pin hole 2232 to implement sealing. It can be understood that when the sealing ring 135 is located between the body portion 131 of the eject pin 130 and the inner wall of the eject pin hole 2232, movement of the eject pin 130 in the eject pin hole 2232 is not hindered. For example, during movement of the eject pin 130, the eject pin 130 moves in the eject pin hole 2232 together with the sealing ring 135.

When the sealing ring 135 is sleeved on the periphery of the body portion 131 of the eject pin 130, an annular groove 134 (as shown in FIG. 9) may be formed in a periphery of the second end 1312 of the body portion 131 of the eject pin 130, and the sealing ring 135 is sleeved in the groove 134. In this way, the eject pin 130 moves in the eject pin hole 2232 together with the sealing ring 135, and the sealing ring 135 is not easily subjected to separation from the body portion 131 of the eject pin 130 on the periphery of the body portion 131 of the eject pin 130.

In the embodiment of this application, the body portion 131 and the abutment portion 133 of the eject pin 130 may be of an integrated structure. The eject pin 130 may be made of a hard plastic member or a metal member.

In the descriptions of embodiments of this application, it should be noted that, unless otherwise specified and defined explicitly, the terms "mount", "connected", and "connect" should be understood in a broad sense, and for example, may be a fixed connection or an indirect connection by an intermediate medium, or may be internal communication between two elements or an interaction relationship between two elements. A person of ordinary skill in the art may understand specific meanings of the above terms in the embodiments of this application based on a specific situation.

In the specification of embodiments, claims, and accompanying drawings of this application, the terms "first", "second", "third", "fourth", and the like (if existent) are intended to distinguish between similar objects but do not necessarily indicate a specific order or sequence. Data used in such a way may be interchanged under appropriate circumstances such that the embodiments of this application described herein can, for example, be implemented in an order other than those illustrated or described herein. In addition, the terms "may include" and "having", and any variations thereof, are intended to cover non-exclusive inclusion. For example, a process, method, system, product, or device including a series of operations or units is not necessarily limited to those operations or units explicitly listed, but may include other operations or units not explicitly listed or inherent to these processes, methods, products, or devices.

Finally, it should be noted that the foregoing embodiments are only used to illustrate the technical solutions of embodiments of this application, but are not used to limit this application. Although embodiments of this application have been illustrated in detail with reference to the foregoing embodiments, it should be understood by a person of ordinary skill in the art that the technical solutions described in the foregoing embodiments may still be modified, or some or all the technical features therein may be equivalently substituted, but these modifications or substitutions do not make the essence of corresponding technical solutions depart from the scope of the technical solutions of each embodiment of this application.

## Claims

1. An electronic device, comprising: a middle frame, an eject pin, and a card tray assembly,
wherein
a side wall of the middle frame is provided with an eject pin hole, and the eject pin is movably arranged in the eject pin hole;
the card tray assembly comprises a circuit board, the middle frame surrounds to form an accommodating cavity, the eject pin hole communicates with the accommodating cavity, and the circuit board is arranged in the accommodating cavity; and
an avoidance portion is arranged on a periphery of an end of the eject pin facing the accommodating cavity, and the avoidance portion is configured to avoid the circuit board during movement of the eject pin toward the accommodating cavity.

2. The electronic device according to claim 1, wherein
the end of the eject pin facing the accommodating cavity is provided with a cut surface facing the circuit board, and the cut surface forms the avoidance portion.

3. The electronic device according to claim 2, wherein the eject pin comprises a body portion and an abutment portion that are connected, the abutment portion is located in the accommodating cavity, and the body portion is arranged in the eject pin hole; and
the cut surface comprises a first cut surface and a second cut surface, the abutment portion is provided with the first cut surface, and the body portion is provided with the second cut surface.

4. The electronic device according to claim 3, wherein the first cut surface is flush with the second cut surface.

5. The electronic device according to claim 3, wherein a side of the abutment portion that faces away from the avoidance portion is provided with a protrusion;
the middle frame comprises a mounting plate and the side wall, the side wall is provided around the mounting plate, a blocking part is arranged on the mounting plate close to the eject pin hole, and the eject pin has an assembly position at the eject pin hole; and
when the eject pin enters the eject pin hole from the accommodating cavity, if the protrusion is opposite to the blocking part, the protrusion is configured to be opposite to the blocking part to constrain the eject pin from reaching the assembly position.

6. The electronic device according to any one of claims 1 to 4, wherein two avoidance portions are provided, and the two avoidance portions face away from each other on a periphery of the eject pin; and
one of the two avoidance portions is located on a side of the eject pin facing the circuit board, and the other avoidance portion is located on a side of the eject pin that faces away from the circuit board.

7. The electronic device according to claim 3, wherein in a length direction of the eject pin, an outer cross-sectional contour of the body portion is of a non-circular structure; and
the eject pin hole is a non-circular hole fitting with the body portion.

8. The electronic device according to claim 7, wherein the non-circular structure comprises a runway shape or a polygon.

9. The electronic device according to claim 3, wherein the body portion is provided with a groove, and a sealing ring is arranged in the groove.

10. The electronic device according to any one of claims 1 to 4, wherein the card tray assembly further comprises a card tray, and the card tray is configured to carry a data card;
the side wall of the middle frame is provided with an assembly port spaced apart from the eject pin hole, and the assembly port communicates with the accommodating cavity;
when the card tray enters the accommodating cavity through the assembly port, the circuit board is opposite to the card tray, and the circuit board is electrically connected to the data card carried by the card tray; and
when the card tray leaves the accommodating cavity through the assembly port, the circuit board is disconnected from the data card carried by the card tray.

11. The electronic device according to claim 10, wherein the card tray assembly further comprises a transmission assembly, the transmission assembly is arranged in the accommodating cavity, and the transmission assembly is in transmission connection to the card tray; in a direction from the eject pin hole to the accommodating cavity, the end of the eject pin facing the accommodating cavity is arranged opposite to the transmission assembly, and the eject pin is configured to move toward the transmission assembly and drive the card tray to leave the accommodating cavity through the assembly port by the transmission assembly.

12. The electronic device according to claim 11, wherein the card tray assembly further comprises a bearing seat, the bearing seat is arranged in the accommodating cavity, the bearing seat has a storage cavity, an opening for the card tray to enter or exit the storage cavity is provided at a position in the storage cavity opposite to the assembly port, and the transmission assembly and the bearing seat are arranged on a side of the circuit board.

13. The electronic device according to claim 12, wherein the transmission assembly comprises a rotating member and a guide rod, and the rotating member is rotatably arranged on the bearing seat;
one end of the rotating member is in transmission connection with the card tray, the other end of the rotating member is connected to one end of the guide rod, and the other end of the guide rod is opposite to the end of the eject pin facing the accommodating cavity; and
the guide rod is movably arranged on a side of the bearing seat.

14. The electronic device according to claim 13, wherein the card tray assembly further comprises an elastic member;
the elastic member is arranged between the eject pin and the guide rod; and
the eject pin is in elastic contact with that guide rod through the elastic member.

15. The electronic device according to claim 14, wherein a pressing part is arranged at an end of the card tray that faces away from the accommodating cavity;
when the card tray enters the storage cavity of the bearing seat through the assembly port, the pressing part covers the eject pin hole and the assembly port; and
a snap-fit pin hole is provided at an end of the pressing part opposite to the eject pin hole.

16. The electronic device according to claim 15, wherein a surface of the side wall of the middle frame away from the accommodating cavity is provided with a recessed region recessed into the middle frame, and a bottom of the recessed region is provided with the eject pin hole and the assembly port; and
when the card tray enters the storage cavity of the bearing seat through the assembly port, the pressing part is located in the recessed region.
